# EUROPÄISCHE PATENTSCHRIFT

(11) **EP 2 565 472 B1**
(45) Veröffentlichungstag und Bekanntmachung des Hinweises auf die Patenterteilung: **06.04.2016**
(21) Anmeldenummer: 12004862.4
(22) Anmeldetag: 29.06.2012
(51) Int. Cl.: F16B 45/00, B66C 1/66

(54) **Sicherungsöse und Sicherungssystem**
Securing eye and securing system
Oeillet de sécurité et système de sécurisation

(30) Priorität: 31.08.2011 DE 202011105177 U; 22.02.2012 DE 202012001808 U
(43) Veröffentlichungstag der Anmeldung: 06.03.2013
(73) Patentinhaber: SKYLOTEC GmbH, 56567 Neuwied (DE)
(72) Erfinder: Rinklake, Rai, Dr., 56567 Neuwied (DE)
(74) Vertreter: Zeitler Volpert Kandlbinder Patent- und Rechtsanwälte Partnerschaft mbB

(56) Entgegenhaltungen:
- DE-A1- 3 627 915
- DE-C1- 3 822 690
- DE-U1- 20 316 970
- FR-A1- 2 580 613
- FR-A1- 2 880 084
- US-A- 2 826 798

## Beschreibung

Die Erfindung betrifft eine Sicherungsöse zur Ausbildung eines lösbaren Anschlagpunkts sowie ein eine solche Sicherungsöse umfassendes Sicherungssystem.

Abnehmbare Anschlagpunkte kommen dort zum Einsatz, wo Personen in größerer Höhe gesichert werden müssen, z.B. beim Putzen von Fensteraußenseiten großer Gebäude. Ein als abnehmbarer Anschlagpunkt bezeichnetes Sicherungssystem kann dabei mehrere Verankerungselemente umfassen, die in verschiedenen Positionen in der Gebäudeaußenwand fest verankert sind und der lösbaren Aufnahme einer Sicherungsöse dienen, die von der zu sichernden Person bedarfsweise in dem jeweiligen Verankerungselement eingesetzt wird. Die Person kann sich dann mittels beispielsweise eines Karabinerhakens an dieser Sicherungsöse sichern. Der wesentliche Vorteil eines abnehmbaren Anschlagpunkts gegenüber einem fest installierten Anschlagpunkt, bei dem die Sicherungsöse dauerhaft in der Gebäudewand fixiert ist, liegt in der optischen Unauffälligkeit.

Ein Sicherungssystem zur Ausbildung eines abnehmbaren Anschlagpunkts ist beispielsweise aus der EP 0 379 282 B1 bekannt. Dieses Sicherungssystem besteht aus einer fest in z.B. einer Gebäudewand zu verankernden Buchse sowie einer Sicherungsöse, die einen Bolzen aufweist, der für das Einstecken in die Buchse vorgesehen ist. An den Bolzen schließt sich ein Sicherungsring an, der der Aufnahme des Karabinerhakens dient. Bolzen und Sicherungsring sind dabei fest miteinander verbunden bzw. einteilig ausgeführt. Diese Ausführung ist mit dem Nachteil verbunden, dass die Sicherungsöse in definierter Ausrichtung in die Buchse gesteckt werden muss und sich während des Gebrauchs auch nicht verdrehen sollte, da eine Belastung des Sicherungsrings nicht in jeder Richtung zulässig ist.

Um diesen Nachteil auszuräumen, wurden entsprechende Sicherungssysteme entwickelt, bei denen der Sicherungsring um eine Achse, die quer zur Längsachse des Bolzens liegt, verschwenkbar mit dem Bolzen verbunden ist. Der zusätzliche Freiheitsgrad des Sicherungsrings sorgt dafür, dass dieser fast immer in der zulässigen Richtung belastet wird. Die Verschwenkbarkeit des Sicherungsrings wird konstruktiv dadurch erreicht, dass dieser mit einer Lagerachse verbunden ist, die drehbar in einer Querbohrung des Bolzens gelagert ist. Daraus ergibt sich eine Verschwenkbarkeit um einen Verschwenkwinkelbereich, der mehr als 180° beträgt und insbesondere nur durch ein Anschlagen des Sicherungsrings an dem Bolzen selbst bzw. der angrenzenden Gehäusewand begrenzt ist.

Bei den bekannten Sicherungssystemen besteht nicht die Möglichkeit mittels einer einfachen Begutachtung festzustellen, ob diese bereits einmal mit einer großen Belastung belastet wurde, wie sie auftritt, wenn der Sturz einer daran gesicherten Person aufgefangen wurde. Die dabei auftretenden kurzzeitigen Belastungen können so hoch sein, dass die Sicherungsösen entsorgt werden müssen, da diese nicht mehr mit einer ausreichenden Sicherheit einen nachfolgenden Sturz auffangen können. Es liegt somit regelmäßig an der gesicherten Person, eine den Sturz auffangende Sicherungsöse anschließend unmittelbar auszutauschen. Wird dies versäumt, kann dies zu Lasten der Sicherheit von Personen gehen, die danach an dieser konkreten Sicherungsöse gesichert werden.

Aus der FR 2 880 084 A1 ist weiterhin ein Befestigungselement zum Anheben von Lasten bekannt. Dieser umfasst einen Gewindebolzen zum Einschrauben in eine Gewindebohrung einer anzuhebenden Last. Ein Befestigungsring ist drehbar um die Längsachse des Gewindebolzens mit diesem verbunden. Zum Einschrauben des Gewindebolzens in die Gewindebohrung wird der Sicherungsring gegen die Kraft eines Federelements ein Stück weit auf dem Gewindebolzen verschoben, wodurch Splinte des Gewindebolzens in Ausnehmungen des Sicherungsrings eingreifen. Dadurch wird die Relativdrehbarkeit von Sicherungsring und Gewindebolzen blockiert, so dass der Gewindebolzen durch den Sicherungsring gedreht werden kann. Das Einschrauben des Gewindebolzens in die Gewindebohrung soll so lange erfolgen, bis die Splinte abscheren. Dadurch wird sichergestellt, dass die Gewindeverbindung mit einem definierten Drehmoment angezogen wird.

Ausgehend von diesem Stand der Technik lag der Erfindung die Aufgabe zugrunde, ein verbessertes gattungsgemäßes Sicherungssystem anzugeben.

Diese Aufgabe wird durch eine Sicherungsöse gemäß dem unabhängigen Anspruch 1 sowie durch ein Sicherungssystem gemäß dem nebengeordneten Anspruch 6 gelöst. Vorteilhafte Ausführungsformen der erfindungsgemäßen Sicherungsöse sind Gegenstand der abhängigen Ansprüche und ergeben sich aus der nachfolgenden Beschreibung der Erfindung.

Die Erfindung vermeidet die aus dem Stand der Technik bekannten Nachteile, indem in eine gattungsgemäße Sicherungsöse, die zumindest einen Bolzen und einen mit dem Bolzen verbundenen Sicherungsring umfasst, konkrete Mittel zur Indikation einer einen Grenzwert (oder einen Grenzwertbereich) überschreitenden Belastung der Sicherungsöse integriert sind.

Der "Grenzwert" oder "Grenzwertbereich" der Belastung, dessen Überschreiten zu der gewünschten Belastungsanzeige führt, kann innerhalb eines relativ großen Bereichs liegen, was sich aus der bestimmungsgemäßen Verwendung der Sicherungsöse ergibt. Die Belastung der Sicherungsöse ist nämlich regelmäßig bei einer lediglich vorbeugenden Sicherung deutlich geringer (z.B. maximal 100N, 200N oder 300N) und beträgt insbesondere regelmäßig nur einen Bruchteil der Belastung, die im Fall der tatsächlichen Sicherung, d.h. bei einem Absturz, auf diese einwirken. Der "Grenzwert" oder "Grenzwertbereich" kann somit innerhalb des Bereichs, der zwischen diesen beiden Belastungen liegt, ohne weiteres auch variieren, ohne die Funktion der erfindungsgemäßen Sicherungsöse relevant zu beeinträchtigen. Beispielsweise besteht die Möglichkeit, den Grenzwert im Bereich der durchschnittlichen oder auch einer unterdurchschnittlichen Gewichtskraft einer an der Sicherungsöse zu sichernden Person anzusetzen. Dieser kann somit beispielsweise 600N, 650N oder 700N betragen. Eine Belastung der Sicherungsöse mit diesen Kräften bei der vorbeugenden Sicherung wäre äußerst ungewöhnlich; gleichzeitig liegt die (Maximal-)Belastung bei der tatsächlichen Sicherung regelmäßig deutlich höher, da die Sicherungsöse bei einem Sturz regelmäßig nicht statisch sondern dynamisch belastet wird.

Erfindungsgemäß ist vorgesehen, dass der Sicherungsring verschwenkbar mit dem Bolzen verbunden ist, wobei das Verschwenken durch einen oder zwei (in den zwei Bewegungsrichtungen begrenzenden) Anschläge begrenzt ist, die derart ausgebildet sind, dass diese bei einer den Grenzwert überschreitenden Belastung des Sicherungsrings die Begrenzung des Schwenkwinkelbereichs freigeben. Demnach ist vorgesehen, dass die Anschläge lediglich dann den Schwenkwinkelbereich erfindungsgemäß begrenzen, wenn die auf den Sicherungsring ausgeübte und mit einer Kraftkomponente auf einen der Anschläge wirkende Zugbelastung vergleichsweise gering ist, wie dies bei einer lediglich vorbeugenden Sicherung einer Person der Fall ist, und den Schwenkwinkelbereich freigibt (d.h. nicht mehr begrenzt), sofern die Zugbelastung und dementsprechend auch die Belastung des entsprechenden Anschlags durch den Sicherungsring den Grenzwert überschreitet, wie dies bei einer tatsächlichen Sicherung der Person erfolgt. Im Einsatzfall der Sicherungsöse, d.h. bei einem Absturz einer daran gesicherten Person, wodurch die Sicherungsöse zumindest mit dem Körpergewicht der gesicherten Person belastet wird, gibt der jeweilige Anschlag somit den Schwenkwinkelbereich frei, wodurch dann vorteilhafterweise der gesamte (beispielsweise lediglich durch ein Anschlagen des Sicherungsrings an der Gebäudewand begrenzte) Schwenkwinkelbereich freigegeben wird.

Dieses Freigeben des zuvor begrenzten Schwenkwinkelbereichs kann vorzugsweise dadurch erfolgen, dass der belastete Anschlag abbricht, wobei hierzu vorzugsweise eine Sollbruchstelle vorgesehen sein kann. Alternativ besteht jedoch auch die Möglichkeit, den Anschlag so auszubilden, dass dieser den größeren Schwenkwinkelbereich bei einer den Grenzwert übersteigenden Belastung freigibt, diese Freigabe jedoch wieder reversibel ist, beispielsweise sobald die Sicherungsöse wieder mit einer den Grenzwert unterschreitenden Belastung belastet wird. Hierzu kann der Anschlag beispielsweise federbelastet aus einer Normalstellung in eine Freigabestellung bewegt (z.B. verschwenkt) werden.

Ein weiterer Vorteil, der sich aus dieser Weiterbildung einer erfindungsgemäßen Sicherungsöse ergibt, liegt darin, dass die Gefahr einer Beschädigung bzw. Verschmutzung einer Gebäudewand durch einen Kontakt mit einem an dem Sicherungsring angeschlagenen Karabinerhaken wirkungsvoll und auf einfache Weise verhindert werden kann, wenn der Schwenkwinkelbereich des Sicherungsrings auf weniger als 180° (vorzugsweise auf einen Bereich von 120° bis 90°, dabei besonders bevorzugt auf einen Bereich zwischen ± 60° und ± 45° um die koaxiale Ausrichtung des Sicherungsrings bezüglich des Bolzens) begrenzt ist, da der Karabinerhaken dadurch stets (ausgenommen bei der tatsächlichen Sicherung) einen ausreichenden Abstand zu der Wand einhält. Auf diese Weise können die Vorteile eines verschwenkbar an dem Bolzen gelagerten Sicherungsrings einer Sicherungsöse, nämlich die Sicherstellung einer stets richtigen Belastung des Sicherungsrings, mit dem Vorteil einer unbeweglichen Ausbildung der Sicherungsöse, nämlich der verringerten Gefahr einer Beschädigung oder Verschmutzung einer Gebäudewand, kombiniert werden.

In einer bevorzugten Ausführungsform der erfindungsgemäßen Sicherungsöse kann der Bolzen sowie der Sicherungsring vorzugsweise (zumindest weitgehend) aus Metall und insbesondere aus Stahl ausgebildet sein, während die den Schwenkwinkelbereich begrenzenden Anschläge aus Kunststoff ausgebildet sein können. Dadurch können die die tatsächliche Sicherungsfunktion übernehmenden Bauteile aus hochfestem Stahl gefertigt werden, während die primär einer "Absturzindikation" und sekundär einem Schutz der Gebäudewandung dienenden Anschläge kostengünstig aus Kunststoff gefertigt werden können.

Weiterhin kann bei einer Ausbildung der Anschläge aus Kunststoff (und insbesondere einem relativ spröden Kunststoff) in diese auf einfache Weise eine Sollbruchstelle integriert werden, wie dies in einer bevorzugten Ausführungsform der erfindungsgemäßen Sicherungsöse vorgesehen ist.

Sofern die Auslegung des Sicherungsrings und des Bolzens derart ist, dass dieser auch nach zumindest einem Absturz einer daran gesicherten Person weiterverwendet werden kann, kann vorzugsweise vorgesehen, dass die Anschläge auswechselbar mit dem Bolzen und/oder dem Sicherungsring verbunden sind. Dadurch kann die erfindungsgemäße Sicherungsöse auch nach einer Belastung im Rahmen einer tatsächlichen Sicherung und einem dabei abgebrochenen Anschlag voll funktionsfähig weiterverwendet werden.

Die Mittel zur Indikation einer einen Grenzwert überschreitenden Belastung des Sicherungsrings müssen selbstverständlich nicht so ausgebildet sein, dass diese lediglich eine (die letzte) den Grenzwert überschreitende Belastung anzeigen. Ebenso besteht die Möglichkeit die Gesamtanzahl der den Grenzwert überschreitenden Belastungen der Sicherungsöse anzeigen zu lassen.

Die Erfindung betrifft weiterhin ein Sicherungssystem mit einer erfindungsgemäßen Sicherungsöse sowie (mindestens) einer Sicherungsbuchse, die für eine Verankerung in einer Wand vorgesehen ist und in die der Bolzen der Sicherungsöse (insbesondere verriegelbar) einsteckbar ist.

Die Erfindung wird nachfolgend anhand eines in den Zeichnungen dargestellten Ausführungsbeispiels näher erläutert. In den Zeichnungen zeigt:
- Fig. 1:: eine erfindungsgemäße Sicherungsöse in einer isometrischen Ansicht;
- Fig. 2:: die Sicherungsöse gemäß Fig. 1 in einer Seitenansicht;
- Fig. 3:: die Sicherungsöse gemäß Fig. 1 in einer Vorderansicht;
- Fig. 4:: eine Sicherungsbuchse zur Verwendung mit der Sicherungsöse gemäß den Fig. 1 bis 3; und
- Fig. 5:: ein aus der Sicherungsöse gemäß den Fig. 1 bis 3 und der Sicherungsbuchse gemäß der Fig. 4 bestehendes Sicherungssystem in einer teilweise geschnittenen, isometrischen Ansicht.

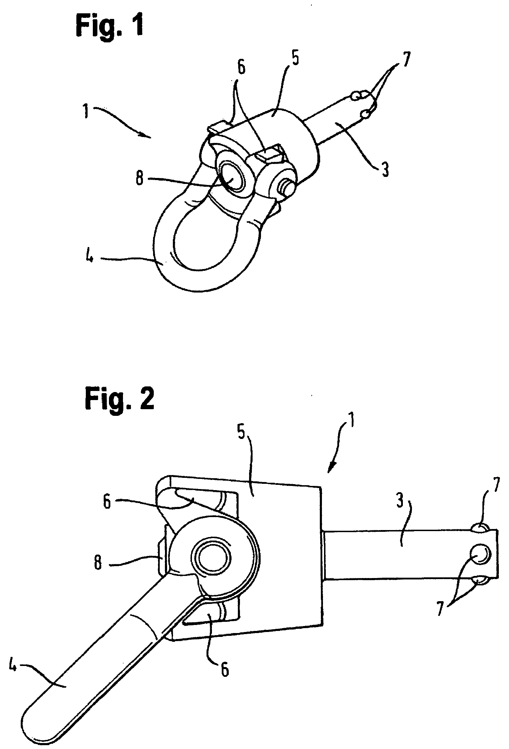

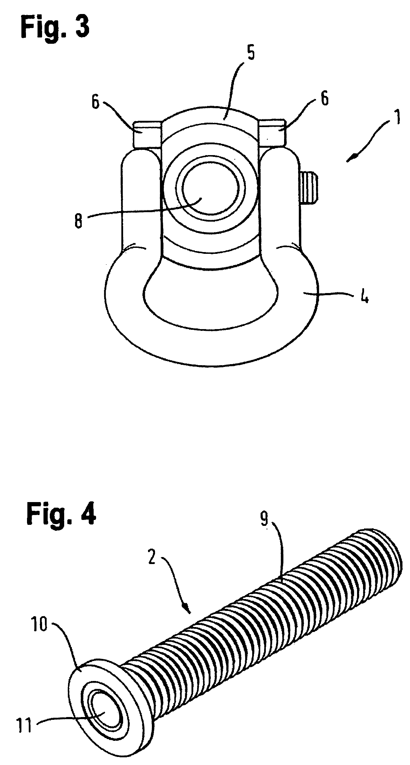

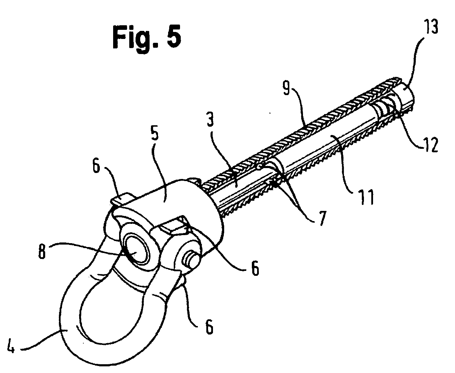

Die Fig. 1 bis 5 zeigen eine Ausführungsform eines erfindungsgemäßen Sicherungssystems (vgl. Fig. 5), das eine Sicherungsöse 1 (vgl. Fig. 1 bis 3) sowie eine Sicherungsbuchse 2 (vgl. Fig. 4) umfasst.

Die Sicherungsöse 1 umfasst einen Grundkörper aus Stahl, der einen Bolzen 3 mit glattflächigem Mantel ausbildet, der für ein Einstecken in die in der Fig. 4 dargestellte Sicherungsbuchse 2 vorgesehen ist.

An dem nicht für das Einstecken in die Sicherungsbuchse 2 vorgesehen Ende des Grundkörpers ist dieser drehbar mit einem Sicherungsring 4 versehen. Der Sicherungsring 4 ist dabei um eine Achse, die senkrecht zu der Längsachse des Bolzens 3 liegt, verschwenkbar. Der Verschwenkwinkelbereich des Sicherungsrings 4 wird durch einen Anschlagring 5 aus Kunststoff begrenzt, der auswechselbar an dem Grundkörper befestigt ist und vier abstehende Anschlagelemente 6 umfasst, die den Schwenkbereich des Sicherungsrings 4 auf ca. ± 45° um dessen koaxiale Ausrichtung, d.h. eine Ausrichtung, bei der die Längsachse des Bolzens 3 innerhalb einer von dem Sicherungsring 4 ausgebildeten Ebene liegt, begrenzt. Diese Begrenzung des Schwenkbereichs des Sicherungsrings 4 ist während einer lediglich vorbeugenden Sicherung vorteilhaft, da diese einen Kontakt eines in den Sicherungsring 4 eingehakten Karabinerhakens mit einer Gebäudewand, in der die Sicherungsöse 1 mittels der Sicherungsbuchse 2 befestigt ist, vermeidet.

Die Anschlagelemente 6 sind derart ausgebildet, dass diese bei einer tatsächlichen Sicherung einer über einen Karabinerhaken an dem Sicherungsring 4 angeschlagenen Person infolge der bei dem Absturz herrschenden Kräfte, die im Wesentlichen in Schwerkraftrichtung und somit senkrecht zu der Längsachse des Bolzens 3 wirken, abbrechen. Dadurch wird erfindungsgemäß eine Absturzindikation erreicht, d.h. eine bereits mit einer erhöhten Belastung infolge eines Absturzes belastete Sicherungsöse 1 kann unmittelbar optisch erkannt werden. Dadurch kann eine ungewollte Wiederverwendung einer solchen belasteten Sicherungsöse 1 vermieden werden.

Der Bolzen 3 der Sicherungsöse 1 ist an seinem steckseitigen Ende mit insgesamt vier kugelförmigen Verriegelungselementen 7 versehen. Diese sind beweglich innerhalb von Mantelöffnungen des Bolzens 3 gelagert und werden durch einen innerhalb des Bolzens 3 (in dessen längsaxialer Richtung) beweglich geführten Verriegelungsbolzen (nicht dargestellt) in der in den Fig. 1 bis 3 und 5 dargestellten Verriegelungsstellung gehalten. In der Verriegelungsstellung überragen die Verriegelungselemente 7 die Mantelfläche des Bolzens 3 und greifen bei einer in die Sicherungsbuchse 2 eingesetzten Sicherungsöse 1 in entsprechende Vertiefungen in der Innenseite der Sicherungsbuchse 2 ein. Dadurch ist die Sicherungsöse 1 gegen ein ungewolltes Lösen aus der Sicherungsbuchse 2 gesichert. Der Verriegelungsbolzen ist durch ein ebenfalls innerhalb des Grundkörpers der Sicherungsöse angeordnetes Federelement (nicht dargestellt) beaufschlagt, wodurch dieser in einer die Verriegelungsstellung der Verriegelungselemente 7 bewirkenden Position gehalten wird.

Zum Einsetzen des Bolzens 3 der Sicherungsöse 1 in die und zum Lösen aus der Aufnahme der Sicherungsbuchse 2 ist es erforderlich, die Verriegelungselemente 7 so weit in das Innere des Bolzens 3 zu verschieben, dass diese dessen Mantelfläche im Wesentlichen nicht mehr überragen. Dies erfolgt durch ein Hineindrücken eines mit dem Verriegelungsbolzen verbundenen Betätigungselements 8, wodurch der Verriegelungsbolzen eine definierte Distanz (in längsaxialer Richtung) innerhalb des Bolzens 3 verschoben wird. Dabei wird ein Abschnitt des Verriegelungsbolzens, in dem dieser einen verkleinerten Außendurchmesser aufweist, in den Kontakt mit den Verriegelungselementen 7 gebracht wird, so dass diese in das Innere des Bolzens 7 ausweichen können. Da der Verriegelungsbolzen in Richtung der Verriegelungsstellung federbelastet ist, bewegt sich dieser nach dem Freigeben des Betätigungselements 8 selbsttätig wieder in die in den Fig. 1 bis 3 und 5 dargestellte Verriegelungsstellung.

Die Sicherungsbuchse 2 ist für eine dauerhafte Fixierung in einer Wand (nicht dargestellt), beispielsweise einer Gebäudewand, vorgesehen. Diese umfasst eine Gewindehülse 9 mit einem Außengewinde sowie einen an einem Ende der Gewindehülse 9 befestigten Anlagering 10, der die Einschubtiefe der Gewindehülse 9 in eine Bohrung in der Wand begrenzt und zudem als Drehlager für die in die Sicherungsbuchse 2 eingesteckte Sicherungsöse 1 dient. Die Sicherungsbuchse 2 umfasst weiterhin eine hülsenförmige Verschlusskappe 11, über die das Innere der Gewindehülse 9 auch dann gegenüber der Umgebung verschlossen ist, wenn keine Sicherungsöse 1 eingesteckt ist. Die Verschlusskappe 11 ist über eine (zylindrische Schrauben-)Feder 12 in die in der Fig. 4 dargestellte Position belastet, in der diese die von dem Anlagering 10 ausgebildete Aufnahmeöffnung verschließt. Dazu erstreckt sich die Feder 12 mit Ihrer einen Seite in die hülsenförmige Verschlusskappe 11 und stützt sich mit ihrer anderen Seite an einem Verschlusselement 13 ab, das das dem Anlagering 10 gegenüberliegende Ende der Gewindehülse 9 verschließt. Beim Einsetzen des Bolzens 3 der Sicherungsöse 1 wird die Verschlusskappe 11 durch den Bolzen 3 in Richtung des Verschlusselements 13 und gegen die Kraft der Feder 12 verschoben.

Die Feder 12 hat nicht nur die Aufgabe, die Verschlusskappe 11 bei einer nicht eingesetzten Sicherungsöse 1 in Richtung der Verschlussstellung gemäß der Fig. 4 zu beaufschlagen, sondern diese unterstützt zudem ein Herausziehen der Sicherungsöse 1 aus der Sicherungsbuchse 2, sobald die Verriegelungselemente 7 durch eine Betätigung des Betätigungselements 8 gelöst werden.

Das Außengewinde auf der Gewindehülse 9 dient der sicheren Fixierung der Sicherungsbuchse 2 in der Wand. Dabei ist entweder vorgesehen, die Sicherungsbuchse über die gesamte Länge der Gewindehülse 9 in einer Bohrung in der Wand zu fixieren oder, sofern die Stärke der Wand geringer als die Länge der Gewindehülse 9 ist, die Sicherungsbuchse 2 durch das Aufschrauben einer Sicherungsmutter (nicht dargestellt) auf das dem Anlagering gegenüberliegende Ende der Gewindehülse 9 zu sichern.

## Patentansprüche

1. Sicherungsöse (1) mit einem Bolzen (3), einem mit dem Bolzen (3) verbundenen Sicherungsring (4) und Mitteln zur Indikation einer einen Grenzwert überschreitenden Belastung der Sicherungsöse (1), **dadurch gekennzeichnet, dass** der Sicherungsring (4) mit dem Bolzen (3) verschwenkbar verbunden ist, wobei ein Verschwenken durch einen oder zwei Anschläge (6) begrenzt ist, wobei die Anschläge derart ausgebildet sind, dass diese bei einer den Grenzwert überschreitenden Belastung des Sicherungsrings (4) die Begrenzung des Schwenkwinkelbereichs freigeben.

2. Sicherungsöse (1) gemäß Anspruch 1, **dadurch gekennzeichnet, dass** der Schwenkwinkelbereich des Sicherungsrings (4) auf einen Bereich zwischen 90° bis 120° begrenzt ist.

3. Sicherungsöse (1) gemäß Anspruch 1 oder 2, **dadurch gekennzeichnet, dass** die Anschläge (6) eine Sollbruchstelle aufweisen.

4. Sicherungsöse (1) gemäß einem der vorhergehenden Ansprüche, **dadurch gekennzeichnet, dass** der Bolzen (3) und der Sicherungsring (4) aus Metall und die Anschläge (6) aus Kunststoff ausgebildet sind.

5. Sicherungsöse gemäß einem der vorhergehenden Ansprüche, **dadurch gekennzeichnet, dass** die Anschläge (6) auswechselbar sind.

6. Sicherungssystem mit einer Sicherungsöse (1) gemäß einem der vorhergehenden Ansprüche und einer Sicherungsbuchse (2), in die der Bolzen (3) der Sicherungsöse (1) einsteckbar ist.

## Claims

1. Securing eye bolt (1) with a bolt (3), a securing ring (4) connected to the bolt (3) and means for indicating a loading of the securing eye bolt (1) exceeding a limit value, **characterised in that** the securing ring (4) is swivellingly connected to the bolt (3), wherein such swivelling is limited by one or two limit stops (6), wherein the limit stops are so designed that they release the limitation of the swivelling angle range in the event of a load on the securing ring (4) exceeding the limit value.

2. Securing eye bolt (1) according to claim 1, **characterised in that** the swivelling angle range of the securing ring (4) is limited to a range between 90° and 120°.

3. Securing eye bolt (1) according to claim 1 or 2, **characterised in that** the limit stops (6) have a predetermined break point.

4. Securing eye bolt (1) according to one of the preceding claims, **characterised in that** the bolt (3) and the securing ring (4) are formed of metal and the limit stops (6) of plastic.

5. Securing eye bolt according to one of the preceding claims, **characterised in that** the limit stops (6) are replaceable.

6. Securing system with a securing eye bolt (1) according to one of the preceding claims and a securing socket (2), into which the bolt (3) of the securing eye bolt (1) can be plugged.

## Revendications

1. Oeillet de sécurité (1) comprenant un goujon (3), une bague de sécurité (4) reliée avec le goujon (3) et des moyens pour indiquer l'application d'une charge sur l'oeillet de sécurité (1) dépassant une valeur limite, **caractérisé en ce que** la bague de sécurité (4) est reliée avec le goujon (3) de manière à pouvoir pivoter, et un pivotement est limité par une ou deux butées (6), dans lequel les butées sont réalisées de telle façon que celles-ci libèrent la limitation de la plage angulaire de pivotement lors de l'application d'une charge sur la bague de sécurité (4) qui dépasse la valeur limite.

2. Oeillet de sécurité (1) selon la revendication 1, **caractérisé en ce que** la plage angulaire de pivotement de la bague de sécurité (4) est limitée à une plage entre 90° à 120°.

3. Oeillet de sécurité (1) selon la revendication 1 ou 2, **caractérisé en ce que** les butées (6) comportent un emplacement de rupture de consigne.

4. Oeillet de sécurité (1) selon l'une des revendications précédentes, **caractérisé en ce que** le goujon (3) et la bague de sécurité (4) sont réalisés en métal, et les butées (6) sont réalisées en matière plastique.

5. Oeillet de sécurité selon l'une des revendications précédentes, **caractérisé en ce que** les butées (6) sont interchangeables.

6. Système de sécurité comprenant un oeillet de sécurité (1) selon l'une des revendications précédentes, et un manchon de sécurité (2) dans lequel lé goujon (3) de l'oeillet de sécurité (1) peut être enfiché.
